# EUROPÄISCHE PATENTANMELDUNG

(11) **EP 3 067 034 A1**
(43) Veröffentlichungstag der Anmeldung: **14.09.2016**
(21) Anmeldenummer: 16159266.2
(22) Anmeldetag: 08.03.2016
(51) Int. Cl.: A61G 21/00

(54) **BESTATTUNGSFAHRZEUG MIT DEKORFENSTER UND BLENDE**

(30) Priorität: 09.03.2015 DE 202015101172 U
(71) Anmelder: Schmidt, Udo, 48734 Reken (DE)
(72) Erfinder: Schmidt, Udo, 48734 Reken (DE)
(74) Vertreter: Habbel, Ludwig

(57) **Zusammenfassung**

Bei einem Bestattungsfahrzeug, mit einer Fahrerkabine und einem Sargraum, und mit einer den Sargraum umgebenden Karosserie (1), wobei in dem den Sargraum umgebenden Bereich der Karosserie (1) ein Dekorfenster (4) angeordnet ist, welches eine Scheibe (5) in Art einer Glasscheibe aufweist sowie eine Sichtblende (8), die hinter der Scheibe (5) angeordnet ist, schlägt die Erfindung vor, dass die Scheibe (5) bereichsweise auf der äußeren Karosseriefläche (2) aufliegt, und an die Scheibe (5) angrenzend eine Blende (14) vorgesehen ist, die sich bis zu einem Absatz (16) erstreckt, der eine Änderung in der äußeren Karosseriefläche (2) darstellt.

## Beschreibung

Die Erfindung betrifft ein Bestattungsfahrzeug nach dem Oberbegriff des Anspruchs 1.

Aus der EP 2 759 425 A2 ist ein gattungsgemäßes Bestattungsfahrzeug bekannt. Mittels des Dekorfensters kann der optische Eindruck eines die Karosseriehaut durchsetzenden Fensters geschaffen werden, ohne ggf. die Karosseriehaut und jedenfalls ohne dahinter angeordnete tragende Strukturen der Fahrzeugkarosserie auftrennen zu müssen. Bei vielen Fahrzeugen sind Vertiefungen in der äußeren Karosseriefläche vorhanden die vom Großserien-Fahrzeughersteller je nach Kundenwunsch geschlossen verbleiben können oder in denen wahlweise Fenster vorgesehen sein können, welche die Karosseriehaut durchsetzen.

Wenn die Scheibe des Dekorfensters über die Vertiefung hinausragt und dort der äußeren Karosseriefläche anliegt, kann das Dekorfenster den optischen Eindruck eines Fensters vermitteln, welches sich von einem großserienmäßig vorhandenen Fenster unterscheidet, so dass dem Hersteller des Bestattungsfahrzeugs mittels des Dekorfensters ermöglicht ist, ohne Eingriffe in die Karosseriestruktur des angelieferten Serienfahrzeugs einen hohen Individualisierungsgrad bei der optischen Ausgestaltung des Bestattungsfahrzeugs zu erzielen.

Der Erfindung liegt die Aufgabe zugrunde, ein gattungsgemäßes Bestattungsfahrzeug dahingehend zu verbessern, dass bei hoher Wirtschaftlichkeit die optische Anmutung sehr großer Fensterflächen ermöglicht wird.

Diese Aufgabe wird durch ein Bestattungsfahrzeug mit den Merkmalen des Anspruchs 1 gelöst. Vorteilhafte Ausgestaltungen sind in den Unteransprüchen beschrieben.

Die Erfindung schlägt mit anderen Worten vor, an die Scheibe des Dekorfensters eine benachbarte Blende angrenzen zu lassen, welche sich bis zu einem Absatz in der äußeren Karosseriefläche erstreckt. Ein solcher Absatz, als eine Änderung in der äußeren Karosseriefläche, stellt eine optische Unterbrechung in der sichtbaren äußeren Oberfläche der Fahrzeugkarosserie dar. Mittels der Blende kann daher beispielsweise die scheinbare Größe des Dekorfensters vergrößert werden, also die optische Wirkung des Dekorfensters. Oder die Blende kann einen Übergang vom Dekorfenster bis zu dem Absatz schaffen, so dass in diesem Fall die Scheibe des Dekorfensters nicht selbst einen derartigen Übergang schaffen muss, beispielsweise keine zum Rand hin abnehmende Materialstärke aufweisen muss. Eine aufwändige Bearbeitung der großflächigen Scheibe kann auf diese Weise vermieden werden, ohne Zugeständnisse an die optisch hochwertige Anmutung des Dekorfensters machen zu müssen.

Der erwähnte Absatz in der äußeren Karosseriefläche kann beispielsweise eine Sicke, ein Falz oder dergleichen sein, so dass im Bereich dieses Absatzes unterschiedliche Licht- und Schattenwirkungen auftreten. Besonders vorteilhaft kann als Absatz eine Stelle in der äußeren Karosseriefläche gewählt werden, bei der diese eine Unterbrechung in Form eines Fensters aufweist.

Da bei einem derartigen Absatz nicht nur die äußere Karosseriefläche endet, sondern auch ein anderer Werkstoff anschließt, nämlich das Fensterglas, und zudem hier üblicherweise ein Versatz von mehreren Millimetern zwischen der äußeren Karosseriefläche und der Außenseite des Fensters vorliegt, ermöglicht ein solcher Absatz ein optisch optimal unauffälliges Ende der Blende.

Wenn das Dekorfenster beispielsweise als Seitenfenster des Sargraums erscheint, kann sich die Blende vorteilhaft vom Dekorfenster aus nach vorn erstrecken bis zu einem Fenster in der Fahrertür bzw. Beifahrertür der Fahrerkabine, so dass die Blende außen auf dem hinteren Türholm bzw. dem hinteren Abschnitt des Fensterrahmens der betreffenden Tür angeordnet ist.

Eine optisch unauffällige Weiterführung des Dekorfensters mittels der Blende wird dadurch ermöglicht, dass die Scheibe des Dekorfensters am Rand - zumindest in dem Bereich des Randes, der an die Blende grenzt - eingefärbt ist und die benachbarte Blende gleichartig eingefärbt ist.

Um einen optisch unauffälligen Übergang zu ermöglichen kann die Blende an ihrem Rand, mit welchem sie der Scheibe des Dekorfensters benachbart ist, die gleiche Materialstärke aufweisen wie die Scheibe in dem Bereich ihres Randes, mit welchem sie an die Blende angrenzt.

Wirtschaftlich besonders vorteilhaft kann das Dekorfenster mit einer Scheibe ausgestaltet sein, die über ihre gesamte Fläche die gleiche Materialstärke aufweist und dementsprechend weder spezielle Formen zu ihrer Herstellung erfordert noch eine aufwändige Nachbearbeitung eines Rohlings, um unterschiedliche Materialstärken wie beispielsweise einen flacheren umlaufenden Rand aufzuweisen.

Statt den Rand der großflächigen Scheibe des Dekorfensters bearbeiten zu müssen, kann vielmehr mit geringerem Arbeitsaufwand und somit wirtschaftlich vorteilhaft eine Angleichung an die benachbarte äußere Karosseriefläche dadurch erfolgen, dass lediglich die Blende bearbeitet wird. So kann die Materialstärke der Blende von dem Rand, an welchem die Blende an die Scheibe des Dekorfensters grenzt, zu dem gegenüberliegenden Rand der Blende hin abnehmen.

Wenn jedoch die Blende sich bis zu einem Absatz in der äußeren Karosseriefläche erstreckt, wo ohnehin ein Versatz in der Oberfläche der Karosserie vorgesehen ist, wie beispielsweise bei dem erwähnten Fenster in einer Tür der Fahrerkabine, kann die Blende wirtschaftlich vorteilhaft, ohne eine Nachbearbeitung zu erfordern, über ihre gesamte Fläche die gleiche Materialstärke aufweisen. In optisch unauffälliger Weise wird nämlich lediglich der Versatz in der Oberfläche der Karosserie geringfügig vergrößert, indem dieser Versatz nicht das Maß von der Außenfläche der Fensterscheibe bis zur äußeren Karosseriefläche beträgt, sondern das Maß von der Außenfläche der Fensterscheibe bis zur Außenfläche der Blende.

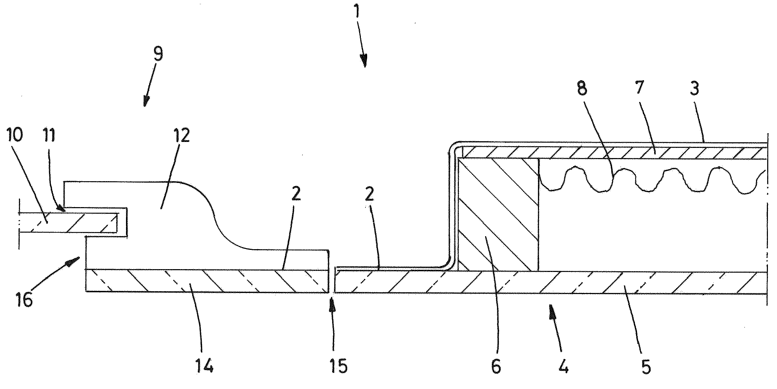

Ein Ausführungsbeispiel der Erfindung wird anhand der rein schematischen Zeichnung nachfolgend näher erläutert. Die Zeichnung stellt dabei einen horizontalen Schnitt durch die Karosserie eines Bestattungsfahrzeugs im Übergangsbereich von einer Tür der Fahrerkabine zum Sargraum dar.

In der Zeichnung ist mit 1 ein Ausschnitt einer Fahrzeugkarosserie dargestellt, wobei die äußere Karosseriefläche mit 2 gekennzeichnet ist. Eine Vertiefung 3 ist in der Fahrzeugkarosserie 1 vorgesehen, wobei in dieser Vertiefung 3 ein Dekorfenster 4 angeordnet ist, dessen äußere Scheibe 5 sich über die Vertiefung 3 hinaus erstreckt und der äußeren Karosseriefläche 2 mit dem Rand der Scheibe 5 anliegt.

Der Aufbau des Dekorfensters 4 sieht in an sich bekannter Weise vor, dass innerhalb der Vertiefung 3 ein Träger 7 angeordnet ist, der an seinem äußeren Rand, der Kontur der Vertiefung 3 folgend, einen Rahmen 6 trägt und innerhalb der von dem Rahmen 6 umgebenen Fläche eine Sichtblende 8, beispielsweise in Form einer bei Bestattungsfahrzeugen üblichen Gardine.

Das Dekorfenster 4 simuliert ein Seitenfenster des Sargraums des Bestattungsfahrzeugs und erstreckt sich über die Vertiefung 3 hinaus weiter nach vorn, wo die Scheibe 5 der äußeren Karosseriefläche 2 anliegt. Die Scheibe 5 erstreckt sich dabei bis zu einer Tür 9 der Fahrerkabine des Bestattungsfahrzeugs. In der Tür 9 ist ein Fenster vorgesehen, dessen Fensterscheibe 10 in einer Nut 11 eines Fensterrahmens 12 höhenbeweglich geführt ist. Der Fensterrahmen 12 bildet mit seiner Außenfläche ebenfalls einen Teil der äußeren Karosseriefläche 2.

Eine Blende 14 ist auf der äußeren Karosseriefläche 2 des Fensterrahmens 12 angeordnet und erstreckt sich bis zu einem Türspalt 15. Die Scheibe 5 des Dekorfensters 4 erstreckt sich ebenfalls, von der anderen Seite, bis zu diesem Türspalt 15, so dass die Scheibe 5 an die Blende 14 grenzt. Im Bereich des Türspalts 15 weisen sowohl die Scheibe 5 als auch die Blende 14 die gleiche Materialstärke auf. Zudem weisen sowohl die Scheibe 5 als auch die Blende 14 jeweils über ihre gesamte Fläche unverändert die gleiche Materialstärke auf.

Dort wo die äußere Karosseriefläche 2 des Fensterrahmens 12 an die Nut 11 grenzt, weist die Karosserie 1 des Bestattungsfahrzeugs ohnehin einen Versatz auf, der einen optisch deutlich wahrnehmbaren Absatz 16 in der Karosserie 1 bildet. Durch die auf dem Fensterrahmen 12 befestigte Blende 14 wird das Maß dieses Absatzes zwar verstärkt, was jedoch in der optischen Wahrnehmbarkeit der gesamten Karosserie 1 kaum auffällt.

## Patentansprüche

1. Bestattungsfahrzeug,
mit einer Fahrerkabine und einem Sargraum,
und mit einer den Sargraum umgebenden Karosserie (1), wobei in dem den Sargraum umgebenden Bereich der Karosserie (1) ein Dekorfenster (4) angeordnet ist,
welches eine Scheibe (5) in Art einer Glasscheibe aufweist sowie eine Sichtblende (8), die hinter der Scheibe (5) angeordnet ist,
**dadurch gekennzeichnet,**
**dass** die Scheibe (5) bereichsweise auf der äußeren Karosseriefläche (2) aufliegt,
und an die Scheibe (5) angrenzend eine Blende (14) vorgesehen ist, die sich bis zu einem Absatz (16) erstreckt, der eine Änderung in der äußeren Karosseriefläche (2) darstellt.

2. Bestattungsfahrzeug nach Anspruch 1,
**dadurch gekennzeichnet,**
**dass** der Absatz (16) durch eine Unterbrechung der äußeren Karosseriefläche (2) geschaffen ist,
wobei in dieser Unterbrechung ein Fenster angeordnet ist.

3. Bestattungsfahrzeug nach Anspruch 2,
**dadurch gekennzeichnet,**
**dass** das Fenster in einer Tür (9) der Fahrerkabine angeordnet ist
und sich die Blende (14) über einen hinteren Abschnitt des Fensterrahmens (12) der Tür (9) erstreckt.

4. Bestattungsfahrzeug nach einem der vorhergehenden Ansprüche,
**dadurch gekennzeichnet,**
**dass** die Scheibe (5) am Rand, der an die Blende (14) grenzt, undurchsichtig eingefärbt ist,
und **dass** die Blende (14) gleichartig eingefärbt ist.

5. Bestattungsfahrzeug nach einem der vorhergehenden Ansprüche,
**dadurch gekennzeichnet,**
**dass** die Blende (14) an ihrem Rand, mit welchem sie der Scheibe (5) benachbart ist, die gleiche Materialstärke aufweist wie die Scheibe (5).

6. Bestattungsfahrzeug nach einem der vorhergehenden Ansprüche,
**dadurch gekennzeichnet,**
**dass** die Scheibe (5) durchgängig die gleiche Materialstärke aufweist.

7. Bestattungsfahrzeug nach einem der vorhergehenden Ansprüche,
**dadurch gekennzeichnet,**
**dass** die Blende (14) durchgängig die gleiche Materialstärke aufweist.

8. Bestattungsfahrzeug nach Anspruch 5,
**dadurch gekennzeichnet,**
**dass** die Materialstärke der Blende (14) zu dem Rand hin abnimmt, welcher der Scheibe (5) gegenüber liegt.
